(19) Europäisches Patentamt
European Patent Office
Office européen des brevets

(11) **EP 2 131 257 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(51) Int Cl.:
***G05B 19/423*** *(2006.01)*

(21) Anmeldenummer: **09006626.7**

(22) Anmeldetag: **15.05.2009**

(54) **Verfahren und Vorrichtung zum Steuern eines Manipulators**

Method and device for controlling a manipulator

Procédé et dispositif destinés à la commande d'un manipulateur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **06.06.2008 DE 102008027008**

(43) Veröffentlichungstag der Anmeldung:
**09.12.2009 Patentblatt 2009/50**

(60) Teilanmeldung:
**15002039.4**

(73) Patentinhaber: **KUKA Deutschland GmbH**
**86165 Augsburg (DE)**

(72) Erfinder:
• **Bischoff, Rainer**
**86163 Augsburg (DE)**
• **Schmirgel, Volker**
**70376 Stuttgart (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
EP-A2- 1 582 955      DE-A1- 3 211 992
DE-A1- 19 626 459      US-A- 4 791 588
US-A- 5 911 892      US-B1- 6 385 508

**Beschreibung**

Die vorliegende Erfindung betrifft ein Verfahren zum Steuern eines Manipulators, insbesondere eines Roboters, durch Ausüben einer Kraft auf den Manipulator durch einen Bediener.

Ein Manipulator weist eine - in der Regel mehrgelenkige - Kinematik von durch eine Manipulatorsteuerung gegeneinander bewegbaren Gliedern zum Bewegen eines Referenzkoordinatensystems, insbesondere eines sogenannten Tool Center Points (TCP) auf, in dem ein Werkzeug wie ein Greifer, einer Schweißzange, ein Skalpell oder dergleichen angeordnet sein kann, um das Werkzeug in eine Arbeitsposition zu bringen bzw. in dieser zu bewegen. Auch eine Regelung, die Steuergrößen auf Basis einer Differenz zwischen Soll- und Istwerten bestimmt, wird vorliegend verallgemeinernd als Steuerung bezeichnet.

Solche Manipulatoren können einerseits nach vorgegebenen Programmen arbeiten. So wiederholen beispielsweise Industrieroboter einprogrammierte Bewegungsabläufe mit hoher Präzision. Manipulatoren können andererseits auch als Handhabungsgeräte eingesetzt werden, die, von einem Bediener geführt, individuelle Arbeiten erledigen und dabei beispielsweise, etwa bei Verladestationen, große Lasten bewegen oder, etwa zur Unterstützung eines Chirurgen, präzise Bewegungen ausführen.

Sowohl programmierbare als auch von einem Bediener geführte Manipulatoren erfordern dabei die Eingabe von Soll-Bewegungen. Insbesondere für Industrieroboter ist es hierzu bisher üblich, den Roboter mittels eines mit der Manipulatorsteuerung kommunizierenden separaten Handgerätes, wie es etwa in der DE 196 26 459 C2 und der US 5 911 892 A beschrieben ist, in verschiedene Posen zu bewegen und diese abzuspeichern. Ein Bahninterpolator verbindet die einzelnen gespeicherten Posen dann zu der Soll-Trajektorie des Roboters. Auch Handhabungsgeräte lassen sich über solche Handgeräte bewegen.

Solche Handgeräte weisen vorteilhaft einen sogenannten Tipp-Betriebsmodus auf. In diesem bewegt sich der Manipulator in einer durch das Handgerät gewählten

Bewegungsrichtung jedes Mal um eine vorbestimmte Strecke, beispielsweise wenige Zehntel Millimeter oder Grad, wenn der Bediener eine Taste des Handgeräts betätigt. Auf diese Weise kann der Bediener den Manipulator sehr präzise, d.h. mit der durch die vorbestimmte Strecke definierten Auflösung, bewegen. Das Handbuch FANUC, "Robot series R-J3iB Controller - ARC Tool Operator's manual", B-81464EN-E/01 beschreibt das Bewegen eines Roboters mittels Schritt-Eingabetasten.

Neben der Eingabe von Soll-Bewegungen über ein Handgerät ist es beispielsweise aus der US 6 385 508 B1, DE 32 11 992 A1 und EP 1 582 955 A2 auch bekannt, eine Soll-Bewegungsrichtung auf Basis einer von einem Bediener auf den Manipulator ausgeübten Kraft zu ermitteln. Hierzu wird in der Regel eine von einem Bediener auf den Manipulator ausgeübte Kraft erfasst und der Manipulator durch die Manipulatorsteuerung in die Richtung dieser Kraft bewegt, solange diese auf den Manipulator ausgeübt wird. Der Bediener kann den Manipulator also, beispielsweise an einem Werkzeugflansch, anfassen und in die gewünschte Richtung ziehen bzw. schieben. Auch lässt sich durch Drehen um einen bestimmten Punkt, z.B. den TCP, eine gewünschte Orientierung einstellen. Hierzu kann der Manipulator nach betriebsinterner Praxis nachgiebig oder gravitationskompensiert geregelt werden, so dass er von dem Bediener mit geringem Kraftaufwand bewegt werden kann.

Obwohl dieses Verfahren gegenüber der herkömmlichen Eingabe mittels separatem Handgerät deutlich intuitiver und damit effizienter ist und insbesondere den Einsatz von Manipulatoren durch Nicht-Fachleute ermöglicht, lässt sich bislang nicht die im Tipp-Betriebsmodus solcher Handgeräte darstellbare Präzision realisieren. Dies liegt zum einen an der Ungenauigkeit, insbesondere einem unwillkürlichen, nicht unterdrückbaren Mikrozittern der Handbewegung, mit der der Bediener den Manipulator führt, zum anderen an Trägheiten, insbesondere Massen- und Regelträgheiten des Manipulators. Ein Bediener kann daher durch Ausüben einer Kraft auf den Manipulator in der Regel den TCP des Manipulators nicht so präzise führen, wie es durch ein Handgerät möglich ist, das jedoch in der Bedienung umständlicher und weniger intuitiv ist.

Aufgabe der vorliegenden Erfindung ist es daher, die Steuerung der Bewegung eines Manipulators zu verbessern.

Diese Aufgabe wird durch ein Verfahren mit den Merkmalen des Anspruchs 1 gelöst. Die Unteransprüche betreffen vorteilhafte Weiterbildungen.

Erfindungsgemäß wird eine Soll-Bewegungsrichtung auf Basis einer von einem Bediener auf den Manipulator ausgeübten Kraft ermittelt. Zur einheitlichen Darstellung wird vorliegend auch ein gegensinnig gleiches Kräftepaar, d.h. ein Drehmoment, verallgemeinernd als Kraft bezeichnet. Insofern umfasst beispielsweise der Begriff "Kraftsensor" auch einen Drehmomentsensor, das Aufbringen einer Kraft auch das Aufbringen eines Drehmomentes etc..

Die Soll-Bewegungsrichtung kann, wie nachfolgend näher erläutert, direkt auf Basis einer auf den Manipulator ausgeübten Kraft ermittelt werden. Hierzu kann eine von einem Bediener auf den Manipulator ausgeübte Kraft erfasst werden, beispielsweise über Kraftsensoren an einem Werkzeugflansch oder an Antriebs- bzw. Gelenkachsen des Manipulators. Dies ist insbesondere dann vorteilhaft, wenn der Manipulator positionsgeregelt wird, so dass ein Bediener ihn nicht, jedenfalls nicht signifikant bewegen kann. Zieht beispielsweise ein Bediener an einen Werkzeugflansch eines steif positionsgeregelten Industrieroboters in eine bestimmte Richtung, wird sich dieser im Allgemeinen kaum bewegen. Gleichwohl kann durch den Kraftanstieg in den verschiedenen Antriebsachsen, den die Positionsregler zur Kompensation dieser äußeren Kraft aufbringen müssen, auf Basis der bekannten Dynamik des Roboters, insbesondere dessen Kinematik, Massen, Trägheitsmomenten und dergleichen, Richtung und Größe dieser auf den Werkzeugflansch wirkenden Kraft erfasst und hieraus eine Soll-Bewegungsrichtung, beispielsweise die Wirkrichtung der äußeren Kraft, ermittelt werden.

Insbesondere wenn, wie nachfolgend ebenfalls näher erläutert, der Manipulator kraftgeregelt, beispielsweise nachgiebig oder steifigkeitsgeregelt wird, so dass ein Bediener ihn bewegen kann, kann zum Ermitteln der Soll-Bewegungsrichtung zusätzlich oder alternativ auch eine Bewegung des Manipulators erfasst werden, die dieser aufgrund einer von einem Bediener auf ihn ausgeübten Kraft ausführt. In diesem Fall wird die Soll-Bewegungsrichtung dann indirekt auf Basis der auf den Manipulator ausgeübten Kraft ermittelt, d.h. auf Basis der durch die Kraft hervorgerufenen Bewegung des Manipulators. Zieht wiederum beispielsweise ein Bediener an einen Werkzeugflansch eines nachgiebig kraftgeregelten Industrieroboters in eine bestimmte Richtung, wird dieser der Zugkraft folgen. Durch die Bewegung in den verschiedenen Achsen kann auf Basis der bekannten Kinematik des Roboters die Richtung der Bewegung des Werkzeugflansches erfasst und hieraus eine Soll-Bewegungsrichtung, beispielsweise die Bewegungsrichtung des Werkzeugflansches, ermittelt werden.

Insofern kann eine Soll-Bewegungsrichtung direkt auf Basis einer erfassten Kraft, die ein Bediener auf den Manipulator ausübt, oder auch indirekt auf Basis dieser Kraft, nämlich auf Basis einer erfassten, durch diese Kraft hervorgerufenen Bewegung ermittelt werden, wobei dann die die Bewegung verursachende Kraft selbst nicht erfasst werden muss. In beiden Fällen wird die Soll-Bewegungsrichtung im Sinne der vorliegenden Erfindung auf Basis einer von einem Bediener auf den Manipulator ausgeübten Kraft ermittelt.

Erfindungsgemäß wird nun der Manipulator in der so ermittelten Soll-Bewegungsrichtung nur um eine vorbestimmte Strecke bewegt. Als Strecke wird dabei verallgemeinernd jedes Bewegungsmaß des Manipulators bezeichnet, also beispielsweise auch eine Drehung, wobei eine Strecke dann beispielsweise in Grad, Radiant oder dergleichen angebbar ist. Wie im Tipp-Betriebsmodus bekannter Handgeräte kann so der Manipulator mit hoher Präzision gesteuert werden, da seine Bewegung mit der durch die vorbestimmte Strecke definierten Auflösung diskretisiert ist.

Hierdurch kann vorteilhaft beispielsweise der Einfluss unwillkürlicher Muskelbewegungen des den Manipulator steuernden Bedieners, aber auch von Massen- und Regelträgheiten, deren Amplitude größer ist als die vorbestimmte Strecke, reduziert werden. Zieht also beispielsweise ein Bediener an einen Werkzeugflansch eines erfindungsgemäß gesteuerten Industrieroboters mit gegebenenfalls zu großer Kraft, bewegt sich dieser gleichwohl zunächst nur um die vorbestimmte Strecke, die vorzugsweise wie im Tipp-Betriebsmodus herkömmlicher Handgeräte sehr klein, etwa im Bereich weniger Zehntel Millimeter oder Grad sein kann. Auf diese Weise kann ein Bediener einen Manipulator vorzugsweise auch mit einer Auflösung steuern, die feiner ist als seine muskuläre.

Wie vorstehend erläutert, kann die Soll-Bewegungsrichtung auf Basis einer auf den Manipulator ausgeübten Kraft direkt oder indirekt, d.h. auf Basis einer Bewegung des Manipulators aufgrund einer auf ihn ausgeübten Kraft ermittelt werden.

Zur direkten Ermittlung kann eine erfindungsgemäße Vorrichtung eine Krafterfassungseinrichtung umfassen, die einen oder mehrere Kraftsensoren an einem Glied und/oder einer Antriebsachse des Manipulators aufweist.

Ein Kraftsensor an einem Glied des Manipulators kann beispielsweise ein Kraftsensor an einem Werkzeugflansch sein, der auch zur Erfassung einer Prozesskraft des Werkzeuges genutzt werden kann. Gleichermaßen kann es sich um einen Kraftsensor an einem zur manuellen Führung des Manipulators vorgesehenen, beispielsweise mit einer Manipulatorhandwurzel verbindbaren, Griff handeln. Ein Kraftsensor an einem Glied des Manipulators kann auch durch eine taktile Beschichtung des Gliedes realisiert sein, die Größer und/oder Richtung einer auf das Glied ausgeübten äußeren Kraft erfasst, beispielsweise durch flächige Drucksensoren oder dergleichen.

Ein Kraftsensor an einer Antriebsachse des Manipulators kann insbesondere ein Drehmomentensensor zur Erfassung eines Antriebs- bzw. Reaktionsdrehmomentes sein, das ein Aktuator, beispielsweise ein Elektromotor, und ein Glied des Roboters aufeinander ausüben. Gleichermaßen ist die Erfassung der auf eine Antriebsachse wirkenden Kraft auch indirekt über die Erfassung der von dem Aktuator aufgenommenen oder abgegebenen Energie oder Leistung möglich. So kann ein Kraftsensor an einer Antriebsachse des Manipulators beispielsweise auch ein Stromsensor eines auf diese Antriebsachse wirkenden Elektromotors sein.

Auch über die Bestimmung von Bewegungen des Manipulators lassen sich auf ihn ausgeübte äußere Kräfte erfassen. Denkt man sich beispielsweise eine rein proportional geregelte Drehachse als mittels Drehfeder gefesselt, so kann aus der Auslenkung durch Division durch die Federsteifigkeit bzw. den Reglerkoeffizienten die Kraft bestimmt werden, die zu dieser Auslenkung führt.

Allgemein kann eine von einem Bediener auf den Manipulator ausgeübte Kraft direkt oder indirekt nach Richtung und/oder Größe erfasst werden. Beispielsweise können hierzu an einem Werkzeugflansch mehrere Kraftsensoren vorgesehen sein, die die Kraftkomponenten in verschiedenen Richtungen erfassen und so die Bestimmung der hieraus zusammengesetzten äußeren Kraft ermöglichen. Gleichermaßen können, insbesondere unter Berücksichtigung der Dynamik des Manipulators, die in den Antriebsachsen wirkenden Kräfte auf eine von außen auf den Manipulator ausgeübte Kraftrichtung und -größe abgebildet werden.

Dabei kann die Richtung und/oder Größe auch diskretisiert sein. Beispielsweise kann bei einer taktilen Beschichtung nur ein Gebiet erfasst werden, auf das der Bediener drückt. Sind etwa an einem Manipulatorglied an sechs einander paarweise gegenüberliegenden Flächen Drucksensoren angeordnet, kann der Bediener durch Drücken auf einen dieser Sensoren eine in drei Raumrichtungen diskretisierte Kraft auf den Manipulator ausüben.

Zur indirekten Ermittlung der Soll-Bewegungsrichtung auf Basis einer auf den Manipulator ausgeübten Kraft, d.h. zur Ermittlung auf Basis einer Bewegung des Manipulators aufgrund einer auf ihn ausgeübten Kraft, kann eine erfindungsgemäße Vorrichtung eine Positions- oder Bewegungserfassungseinrichtung umfassen, die einen oder mehrere Positions- oder Bewegungssensoren an einem Glied und/oder einer Antriebsachse des Manipulators aufweist.

Insbesondere über Sensoren zur Erfassung von Achsstellungen oder -bewegungen des Manipulators, beispielsweise Sensoren zur Erfassung von Drehstellungen oder -bewegungen wie etwa Winkelencodern oder Tachogeneratoren, kann eine Bewegung erfasst werden, die der Manipulator, insbesondere sein TCP, aufgrund einer Kraft ausführt, die ein Bediener auf ihn ausübt. Wird die Soll-Bewegungsrichtung indirekt auf Basis der ausgeübten Kraft, nämlich auf Basis der durch sie hervorgerufenen Bewegung ermittelt, können daher zusätzlich oder alternativ zu Kraftsensoren auch Sensoren zur Erfassung von Gelenkstellungen oder Gelenkstellungsänderungen vorgesehen sein. Auch diese können wie die Kraftsensoren diskretisiert sein.

Eine weitere Möglichkeit zur Erfassung von Achsstellungen oder -bewegungen des Manipulators über Sensoren stellen so genannte Trackingsysteme dar. Dabei können beispielsweise optisch, elektromagnetisch oder auf andere Weise erfassbare Marker (z.B. retroreflektive Kugeln) in einem bestimmten Verhältnis zueinander am Flansch des Roboters so befestigt werden, dass eine als externes Kamerasystem ausgebildete Sensoranordnung in der Lage ist, die Position dieser Marken und damit auch die Position des Flansches durch Raum und Zeit zu verfolgen.

Eine erfindungsgemäß erfasste Bewegung des Manipulators kann insbesondere im Gelenk- oder Koordinatenraum, d.h. als Änderung der Stellung von Gelenken des Manipulators, oder im kartesischen Raum, insbesondere als Positions-, d.h. Lage- und/oder Oreintierungsänderung eines manipulatorfesten Referenzkoordinatensystems, etwa des TCPs definiert sein.

Auf Basis der so erfassten, auf den Manipulator ausgeübten Kraft bzw. durch diese hervorgerufenen Bewegung wird die Soll-Bewegungsrichtung ermittelt. In einer einfachen Ausführung können hierzu erfasste Kraft- bzw. Bewegungsrichtung und hieraus ermittelte Soll-Bewegungsrichtung übereinstimmen. Dies ermöglicht eine besonders intuitive Bedienung: der Bediener zieht bzw. drückt in die Richtung, in die der Manipulator sich bewegen soll, zieht also beispielsweise einen Werkzeugflansch zur nächsten Arbeitsposition.

Gleichermaßen sind jedoch auch andere Zusammenhänge zwischen erfasster Kraft- bzw. Bewegungsrichtung und hieraus ermittelter Soll-Bewegungsrichtung möglich. Ist es dem Bediener beispielsweise nicht möglich, den Manipulator in die gewünschte Richtung zu bewegen, weil beispielsweise Hindernisse den Weg versperren, ist es auch möglich eine andere, intuitiv erscheinende Bewegungsrichtung zu wählen, die in einem bestimmten Verhältnis zur eigentlich gewünschten Richtung liegt. Ist dieses Verhältnis bekannt, kann aus der gezeigten Richtung dann die eigentlich gewünschte Richtung berechnet werden. Eine bevorzugte Richtung zum Aufzeigen der gewünschten Bewegungsrichtung stellt die spiegelverkehrte Richtung dar. In einer bevorzugten Ausführung kann daher die Soll-Bewegungsrichtung als Gegenrichtung zu der erfassten Kraft- bzw. Bewegungsrichtung ermittelt werden.

Es sind auch andere Zusammenhänge zwischen erfasster Kraft- bzw. Bewegungsrichtung und hieraus ermittelter Soll-Bewegungsrichtung möglich. Insbesondere kann die Soll-Bewegungsrichtung auf einen Unterraum des kartesischen oder Gelenk-Arbeitsraums des Manipulators eingeschränkt sein.

Beispielsweise kann der Bediener durch Wahl eines entsprechenden Modus die Soll-Bewegungsrichtung auf eine oder mehrere Achsen des kartesischen Raums, etwa die Gravitationsachse, einschränken. Dann kann sich die Soll-Bewegungsrichtung beispielsweise als Skalarprodukt aus erfasster Kraft- bzw. Bewegungsrichtung und Gravitationsachse, d.h. als Projektion der erfassten Kraft- bzw. Bewegungsrichtung auf die Gravitationsachse, ergeben. Als kartesischer Arbeitsraum wird diesbezüglich der tatsächliche Raum bezeichnet, in dem sich beispielsweise der TCP eines Manipulators bewegen kann, wobei der Unterraum sowohl Translations- als auch Rotationsfreiheitsgrade umfassen kann. So kann die Soll-Bewegungsrichtung beispielsweise auch auf eine Drehung um eine Achse des kartesischen Raums beschränkt werden. Der Begriff des Unterraums ist daher derart abstrakt zu verstehen, dass eine erfasste Kraft- bzw. Bewegungsrichtung auch in eine ein- oder mehrdimensionale reine Translations- oder reine Rotationsbewegung abgebildet werden kann.

Gleichermaßen kann der Bediener durch Wahl eines entsprechenden Modus die Soll-Bewegungsrichtung auf eine oder mehrere Gelenkachsen, etwa die Drehachse eines Manipulatorkarussells gegen eine ortsfeste Basis, einschränken, so dass eine erfasste Kraft- bzw. Bewegungsrichtung auf diese Drehachse abgebildet wird, d.h. aus einer auf den Manipulator ausgeübten Kraft bzw. einer hierdurch hervorgerufene Bewegung eine Soll-Drehrichtung des Karussells im mathematisch positiven oder negativen Sinn ermittelt wird. Als Gelenk- oder Konfigurations-Arbeitsraum wird diesbezüglich der mathematische Raum bezeichnet, der durch die Gelenkachsen des Manipulators definiert ist.

Der Unterraum, auf den die Soll-Bewegungsrichtung eingeschränkt ist, kann auch mehrdimensional sein - es können also insbesondere auch Bewegungs(hyper)flächen oder Bewegungs(hyper)räume definiert sein, auf bzw. in die die erfasste Kraft- bzw. Bewegungsrichtung abgebildet wird, d.h. auf bzw. in denen sich der Manipulator bewegen darf. So kann beispielsweise ein Chirurg bei einer Operation mittels Handhabungsgerät einen zulässigen Korridor definieren, innerhalb dessen sich der TCP bzw. ein vom Manipulator geführtes Skalpell bewegen darf - hierdurch wird das Risiko einer versehentlichen Fehlbewegung reduziert.

Die Einschränkung der Soll-Bewegungsrichtung auf einen Unterraum des kartesischen oder Gelenk-Arbeitsraums des Manipulators kann insbesondere mittels einer grafischen oder numerischen Eingabe vorgegeben werden. Auf diese Weise ist es beispielsweise möglich, den Roboter entlang bestimmter Koordinatenachsen, z.B. Werkstück- oder Werkzeugachsen zu bewegen. Bevorzugt kann dabei eine Bewegungsmöglichkeit des Manipulators auf diesen Unterraum eingeschränkt werden, indem beispielsweise entsprechende Gelenke gesperrt oder miteinander kinematisch gekoppelt werden. Schränkt der Bediener beispielsweise die Soll-Bewegungsrichtung auf eine Werkzeugachse ein, kann der Manipulator in dieser Richtung nachgiebig geregelt werden, so dass der Bediener ihn in dieser Achsrichtung bewegen kann, während eine Bewegung in andere Richtungen gesperrt oder wenigstens erschwert ist.

Ganz allgemein wird also eine erfasste Kraft(richtung) F bzw. $\frac{F}{|F|}$ bzw. eine erfasste Bewegung q des Manipulators, die sich aufgrund einer von einem Bediener auf ihn ausgeübten Kraft ergibt, beispielsweise die Bewegung eines TCP oder von Gelenken des Manipulators, auf eine Soll-Bewegungsrichtung s abgebildet, wobei diese insbesondere in einem Unterraum U des kartesischen oder Gelenk-Arbeitsraums A liegen kann:

$$\frac{F}{|F|} \rightarrow s \in U \subseteq A;$$

$$q \rightarrow s \in U \subseteq A,$$

wobei q eine Bewegung des Manipulators beschreibt, beispielsweise die Änderung eines Ortsvektors zum TCP oder eine Änderung der Gelenkkoordinaten des Manipulators.

Die vorbestimmte Strecke kann fest vorgegeben sein und beispielsweise einige Zehntel Millimeter oder Grad betragen, was sich in der Praxis bekannter Handgeräte als vorteilhaft erwiesen hat. Bevorzugt ist die vorbestimmte Strecke vom Bediener fest vorgebbar. Hierzu kann er beispielsweise mittels einer Eingabeeinrichtung die Größe der Strecke eingeben. Der Manipulator bewegt sich dann im erfindungsgemäßen Betrieb jedes Mal um diese feste Strecke in der Soll-Bewegungsrichtung, die direkt oder indirekt auf Basis der Kraft ermittelt wird, die der Bediener auf den Manipulator ausübt.

Gleichermaßen kann der Manipulator in der ermittelten Soll-Bewegungsrichtung um die vorbestimmte Strecke bewegt werden, indem die vorbestimmte Strecke in einer vorbestimmten Zeit abgefahren wird. Die vorbestimmte Strecke wird in diesem Falle also nicht direkt, d.h. in Weglänge, Winkel oder dergleichen, sondern nur indirekt durch die Bewegungszeit vorgegeben. Der Manipulator bewegt sich dann im erfindungsgemäßen Betrieb beispielsweise jedes Mal für einige Zehntel Sekunden in der Soll-Bewegungsrichtung. Während beide Ausführungen entsprechend der Bewegungsgeschwindigkeit des Manipulators auseinander hervorgehen, kann das Bewegen während einer vorbestimmten Zeit eine intuitivere Eingabe ermöglichen.

Die vorbestimmte Strecke kann auch variabel sein. Insbesondere kann sie, beispielsweise linear, exponentiell oder nach einem vorbestimmten Zusammenhang, der beispielsweise tabellarisch oder formelmäßig abgespeichert sein kann, von der auf den Manipulator ausgeübten Kraft bzw. der hierdurch hervorgerufenen Bewegung abhängen. So kann beispielsweise bei einem proportionalen Zusammenhang zwischen der Größe der erfassten Kraft, die der Bediener auf den Manipulator ausübt, und der vorbestimmten Strecke der Bediener durch Ausüben einer größeren Kraft den Manipulator in einem Schritt um eine größere Strecke bewegen, um etwa rasch von einer zu einer anderen Arbeitsposition zu gelangen. In der Nähe der Arbeitsposition kann der Bediener durch Aufbringen einer geringeren äußeren Kraft die Schrittweite der Manipulatorbewegung reduzieren, um diesen präziser zu steuern.

Insbesondere, wenn zur Ermittlung der Soll-Bewegungsrichtung der Manipulator vom Bediener bewegt wird, also beispielsweise in eine gewünschte Pose gezogen bzw. gedrückt wird, kann die vorbestimmte Strecke auch von dem Maß dieser Bewegung des Manipulators aufgrund der auf ihn ausgeübten Kraft abhängen, vorzugsweise wiederum linear, exponentiell oder nach einem vorbestimmten Zusammenhang, der beispielsweise tabellarisch oder formelmäßig abgespeichert sein kann. Somit kann der Bediener den Manipulator beispielsweise zunächst grob in eine Soll-Pose bewegen. Der Manipulator kehrt, wenn die vom Bediener auf ihn ausgeübte Kraft entfällt, in seine Ausgangslage zurück und bewegt sich anschließend um eine vorbestimmte Strecke entlang der Soll-Bewegungsrichtung, die beispielsweise durch die Differenz zwischen Ausgangslage und Soll-Pose bestimmt wird. Auch hierbei ist es möglich, den Roboter beispielsweise in entgegengesetzter Richtung zur eigentlichen Soll-Bewegungsrichtung zu bewegen, wenn beispielsweise in Soll-Bewegungsrichtung der Platz nicht ausreicht. Durch eine geeignete Transformation kann die Manipulatorsteuerung dann die gewünschte Soll-Bewegungsrichtung bestimmen.

In einer bevorzugten Ausführung der vorliegenden Erfindung wird der Schritt, den Manipulator in der ermittelten Soll-Bewegungsrichtung um eine vorbestimmte Strecke zu bewegen, wiederholt, solange eine Kraft auf den Manipulator ausgeübt wird. Übt daher der Bediener weiterhin eine Kraft auf den Manipulator aus, bewegt sich dieser in der durch die vorbestimmte Strecke definierten Rasterung in der Soll-Bewegungsrichtung. Um dabei eine möglichst präzise Steuerung des Manipulators zu ermöglichen, kann dabei eine Pause zwischen zwei aufeinanderfolgenden Bewegungen des Manipulators vorgesehen sein, d.h. der Manipulator bewegt sich aufgrund der vom Bediener auf ihn ausgeübten Kraft zunächst um eine vorbestimmte Strecke, verharrt in der erreichten Position, und bewegt sich anschließend nur dann erneut um eine vorbestimmte Strecke, wenn der Bediener weiterhin Kraft auf ihn ausübt. Auf diese Weise wird dem Bediener Zeit gegeben, die Kraftausübung einzustellen, wenn der Manipulator die gewünschte Pose erreicht hat. Vorzugsweise kann die Dauer diese Pause vom Bediener vorgegeben werden, so dass sich je nach Pausenlänge ein quasi kontinuierliche oder eine deutlicher gerasterte Steuerung ergibt.

Die Wiederholung des Schrittes, den Manipulator in der ermittelten Soll-Bewegungsrichtung um eine vorbestimmte Strecke zu bewegen, kann auch ohne erneute Ermittelung der Soll-Bewegungsrichtung erfolgen. Der Bediener kann hierzu, etwa durch Eingabe an einem Eingabegerät einer Manipulatorsteuerung, eine ermittelte Soll-Bewegungsrichtung quasi "einfrieren" und den Manipulator anschließend sozusagen durch mehrfaches Antippen jeweils um die vorbestimmte Strecke in dieser Soll-Bewegungsrichtung bewegen. In bevorzugter Ausgestaltung der Erfindung kann nach einer gewisse Zeit der Inaktivität des Benutzers die Soll-Bewegungsrichtung wieder freigegeben werden. Gleichermaßen kann jedoch auch jedes Mal die Soll-Bewegungsrichtung neu auf Basis der Kraft, die der Bediener auf den Manipulator ausübt, ermittelt werden, um eine Korrektur der Soll-Bewegungsrichtung während der Bewegung des Manipulators zu ermöglichen.

Der Manipulator kann kraftgeregelt werden, insbesondere nachgiebig oder steifigkeitsgeregelt. Beispielsweise durch Aufschalten von Antriebskräften, die im Wesentlichen die Gewichtskräfte des Manipulators in der aktuellen Pose kompensieren, oder durch Vorgabe entsprechend geringer Proportionalverstärkungen einer Positionsregelung ohne Integralanteil, ist es möglich, einen Manipulator so zu regeln, dass ein Bediener ihn mit relativ geringem Krafteinsatz bewegen kann. Übt der Bediener nun Kräfte auf dem Manipulator aus, kann er diesen bewegen und so eine Soll-Bewegungsrichtung sehr einfach und präzise vorgeben. Insbesondere kann er den Manipulator in eine gewünschte Pose auslenken, aus der ein steifigkeitsgeregelter Manipulator in seine Ausgangspose zurückkehrt. Die Soll-Bewegungsrichtung kann dann aus der Differenz von gewünschter und Ausgangspose ermittelt werden.

Werden auf den Manipulator ausgeübte Kräfte direkt, beispielsweise durch Kraftsensoren, erfasst, kann dieser vorzugsweise auch positionsgeregelt werden, so dass er seine Ausgangslage trotz auf ihn einwirkenden Kräften beibehält. Dies ist im Gegensatz zu oben erläuterter Kraftregelung besonders dann vorteilhaft, wenn der Manipulator - beispielsweise aufgrund eines eingeschränkten Arbeitsraumes - bei der Steuerung keine großen Bewegungen ausführen soll oder darf.

Weitere Vorteile und Merkmale ergeben sich aus den Unteransprüchen und den Ausführungsbeispielen. Hierzu zeigt, teilweise schematisiert:

Fig. 1:     einen nach einer Ausführung der vorliegenden Erfindung gesteuerten Manipulator; und

Fig. 2:     eine Steuerung nach einer Ausführung der vorliegenden Erfindung.

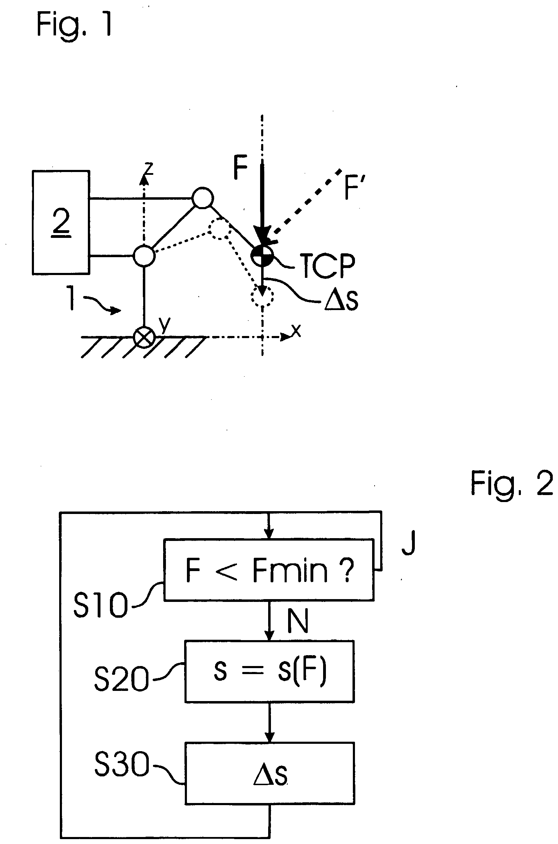

Fig. 1 zeigt in stark vereinfachter Darstellung einen zweigelenkigen Roboter 1 mit zwei Drehgelenken, die von (nicht dargestellten) Elektromotoren aktuiert werden. Ein erster dieser beiden Elektromotoren dreht dabei eine Schwinge des Roboters 1 um eine zu der y-Achse eines raumfesten Koordinatensystems, welches in Fig. 1 strichpunktiert eingezeichnet ist, parallele erste Drehachse, der andere der beiden Elektromotoren dreht einen Arm des Roboters 1, an dessen äußerem Ende der TCP angeordnet ist, um eine hierzu parallele zweite Drehachse. Beide Elektromotoren werden durch eine Manipulatorsteuerung 2 angesteuert, in der auch eine Vorrichtung zur Durchführung eines Verfahrens nach einer Ausführung der vorliegenden Erfindung in nicht näher dargestellter Weise implementiert ist. Hierzu werden Motormomente, die die beiden Elektromotoren auf die Achsen ausüben, über Drehmomentsensoren erfasst und in die Vorrichtung übertragen.

Nach einer ersten Ausführung der vorliegenden Erfindung wird der Roboter 1 positionsgeregelt. Hierzu erfassen Winkelsensoren (nicht dargestellt) die Ist-Winkellage (q1, q2) der ersten und zweiten Achse. Die Manipulatorsteuerung 2 führt steifen Proportional-Differential-Integral-Einzelgelenkreglern (nicht dargestellt) des ersten und zweiten Elektromotors Soll-Winkellagen (in der in Fig. 1 ausgezogen dargestellten Ausgangsstellung beispielsweise jeweils 45°) zu, aus denen diese unter Subtraktion der erfassten Ist-Winkellage eine Steuergröße für den jeweiligen Elektromotor ermitteln, so dass der Roboter 1 präzise in der durch die Soll-Winkellagen definierten Pose verharrt.

Nun drückt ein Bediener (nicht dargestellt) mit einer Kraft F in Gravitationsrichtung, d.h. in negativer z-Richtung des raumfesten Koordinatensystems auf den TCP. Dies führt zu entsprechenden Drehmomenten in der ersten und zweiten Achse, die durch die Drehmomentsensoren erfasst werden. Die steife PID-Gelenkregelung verhindert zwar, dass der Roboter 1 in Richtung der vom Benutzer auf ihn ausgeübten Kraft F erkennbar nachgibt. Gleichwohl kann aus den Drehmomenten, die nun in den beiden Achsen erfasst werden, auf Basis der bekannten Dynamik, insbesondere der bekannten Kinematik des Roboters 1 Richtung und Größe dieser Kraft ermittelt werden, indem beispielsweise die erfassten Motordrehmomente in den kartesischen Raum, d.h. in das ortsfeste Koordinatensystem x-y-z abgebildet werden.

Da der Roboter 1 des Ausführungsbeispiels nur zwei Freiheitsgrade aufweist, ist diese Abbildung nicht eineindeutig - so kann beispielsweise eine Kraft in y-Richtung nicht auf Drehmomente in den beiden Drehachsen abgebildet werden, sondern liegt im Nullraum der Jacobimatrix. Für die Erläuterung der vorliegenden Erfindung ist dieses einfache Ausführungsbeispiel jedoch zweckmäßig. Denn auch hier kann Richtung und Größe der Kraft F in der x-z-Ebene aus den durch sie hervorgerufenen Drehmomenten in den beiden Achsen bestimmt werden.

Hat nun die in der Manipulatorsteuerung 2 implementierte Vorrichtung in einem Schritt S10 (vgl. Fig. 2) erfasst, dass ein Benutzer eine äußere Kraft F auf den Manipulator ausübt, die einen unteren Schwellenwert Fmin übersteigt (S10: "N"), wird hieraus in einem Schritt S20 eine Soll-Bewegungsrichtung s als Funktion der erfassten Kraft F ermittelt:

$$s = s(F)$$

Andernfalls (S10: "J") kehrt das Verfahren zu Schritt S10 zurück und prüft erneut, ob ein Benutzer eine äußere Kraft F auf den Manipulator ausübt, die einen unteren Schwellenwert Fmin übersteigt. Dieser Schritt verhindert eine ungewollte Bewegung des Roboters 1 aufgrund geringer, versehentlich auf ihn ausgeübter Kräfte.

In der ersten Ausführung ist die Soll-Bewegungsrichtung kollinear zur erfassten Kraftrichtung:

$$s = F/|F|.$$

Nun bewegt die Vorrichtung in einem Schritt S30 den Roboter 1 unter entsprechender Ansteuerung der beiden Elektromotoren in der in Fig. 1 strichliert angedeuteten Weise derart, dass sein TCP sich in Richtung der auf ihn ausgeübten Kraft F, d.h. entgegen der z-Achse des ortsfesten kartesischen Koordinatensystems, um eine vom Bediener vorgewählte Strecke ∆s bewegt, die im Ausführungsbeispiel 1/10 mm beträgt (|∆s| = 0,1 mm).

Anschließend kehrt das Verfahren zu Schritt S10 zurück und prüft, ob weiterhin eine den Schwellwert Fmin überschreitenden äußere Kraft auf den Roboter 1 ausgeübt wird, d.h. der Bediener weiterhin in negativer z-Richtung auf seinen TCP drückt. Solange dies der Fall ist, wiederholt die Vorrichtung die Schritte S10 bis S30.

Dabei ist zwischen den Schritten S30 und S10 eine Pause vorgesehen, deren zeitliche Dauer der Bediener wählt, und die im Ausführungsbeispiel 1/10 Sekunde dauert. Durch fortwährenden Druck F auf den TCP kann der Bediener diesen daher auf einfache, intuitive Art gerastert in 0,1 mm-Schritten und damit sehr präzise bewegen. Reduziert er dabei nach Erreichen der gewünschten Pose die Kraft F innerhalb der Pausenzeit von 0,1 s unter den Schwellwert Fmin, bewegt sich der Roboter nicht mehr weiter (S10: "J"). Somit fährt der Roboter die gewünschte Pose mit einer Toleranz von 0,1 mm an, also einer Genauigkeit, die deutlich unter der bisher aufgrund von Bediener-, Massen- und Regelträgheiten erreichbaren Auflösung bei Steuerung des Roboters durch Ausüben einer Kraft liegt.

In einer zweiten Ausführung, die im übrigen mit der vorstehend erläuterten ersten Ausführung identisch ist und daher nicht erneut beschrieben wird, hat der Bediener vorab als Dominanzachse die z-Achse ausgewählt. Die auf Basis der erfassten Kraft zu ermittelnde Soll-Bewegungsrichtung wird daher auf einen Unterraum des kartesischen Arbeitsraums des Manipulators in Form der z-Achse eingeschränkt, d.h. einen eindimensionalen Unterraum.

Drückt nun der Bediener mit einer von der z-Achse abweichenden Kraft F' auf den TCP, die in Fig. 1 strichliert angedeutet ist, wird diese auf eine Soll-Bewegungsrichtung im zulässigen Unterraum abgebildet, im Ausführungsbeispiel also auf die z-Achse projiziert. Übersteigt diese Kraftkomponente den Schwellwert Fmin, so wird der TCP des Roboters 1 um die vorbestimmte Strecke ∆s in bzw. entgegen der Gravitationsrichtung z bewegt, je nachdem, ob die Kraft F eine Komponente in positiver oder negativer z-Richtung aufweist. Auf diese Weise kann der Roboter noch präziser gesteuert werden, da sich der Bediener darauf konzentrieren kann, die Kraft F' solange aufzubringen, bis die in 1/10 mm Schritten gerasterte Bewegung in z-Richtung die gewünschte Pose erreicht.

Selbstverständlich sind auch andere, hier nicht gezeigte Unterräume möglich - so kann beispielsweise der Benutzer die Soll-Bewegungsrichtung auf einen Unterraum des Gelenk-Arbeitsraums des Manipulators einschränken, beispielsweise auf eine Drehung im zweiten, äußeren Drehgelenk. Die Ausübung der dargestellten Kraft F' würde dann beispielsweise zu einer mathematisch negativen Drehung (im Uhrzeigersinn in Fig. 1) um eine vorbestimmte Strecke von jeweils 0,1° bzw. 6 Winkelminuten führen.

In einer dritten Ausführung, die im übrigen mit der vorstehend erläuterten ersten und zweiten Ausführung identisch ist und daher nicht erneut beschrieben wird, ist der Roboter 1 nachgiebig steifigkeitsgeregelt. Hierzu wird virtuell eine weiche Feder zwischen einer Ist-Position des TCP und der in Fig. 1 durchgezogen dargestellten Ausgangsposition gespannt, deren Federkraft durch die Rückwärtskinematik auf die einzelnen Elektromotoren aufgeschaltet wird. Als Folge verhält sich der Roboter 1 so, als wäre sein TCP mit einer weichen Feder an die Ausgangsposition gefesselt.

Nun kann der Bediener, indem er die in Fig. 1 ausgezogen dargestellte Kraft F auf den TCP ausübt, diesen in negativer z-Richtung, d.h. zur gewünschten Soll-Pose hin verschieben.

In dieser dritten Ausführung wird zur Ermittlung der Soll-Bewegungsrichtung nicht die vom Bediener auf den Roboter 1 ausgeübte Kraft F, sondern die durch diese hervorgerufene Bewegung q = (Δq1, Δq2) erfasst, wobei Δq1, Δq2 die Änderung der Gelenkstellung des ersten bzw. zweiten Drehgelenks beschreiben, die sich im Ausführungsbeispiel eindeutig aus der Änderung des Ortsvektors $r_{TCP}$ des TCPs im ortsfesten Koordinatensystem ergeben.

Ein Verfahren nach der dritten Ausführung der vorliegenden Erfindung beginnt, initiiert beispielsweise durch eine entsprechende Eingabe an der Manipulatorsteuerung 2, zunächst mit einem modifzierten Schritt S20. In diesem wird die Soll-Bewegungsrichtung als die Richtung ermittelt, in die der Bediener den Roboter bewegt. Allgemein wird also die Soll-Bewegungsrichtung s als Funktion der erfassten, durch die vom Bediener auf den Roboter 1 ausgeübte Kraft F hervorgerufenen Bewegung q = (Δq1, Δq2) ermittelt:

$$s = s(q)$$

In der dritten Ausführung wird die Soll-Bewegungsrichtung also nur indirekt auf Basis der vom Bediener auf den Roboter 1 ausgeübten Kraft ermittelt, nämlich auf Basis der durch sie hervorgerufenen Bewegung q des Roboters 1, die von den Winkelsensoren in den Gelenken erfasst wird.

Anschließend bewegt sich der Roboter in der so ermittelten Soll-Bewegungsrichtung, im Ausführungsbeispiel antiparallel zur z-Achse (vertikal nach unten in Fig. 1) um die vorbestimmte Strecke Δs (Schritt S30) und verharrt dort für eine Pause von 0,1 s, bevor das Verfahren nun zu Schritt S10 zurückkehrt.

Wird dort festgestellt, dass der Bediener eine ausreichend große Kraft auf den Roboter 1 ausübt (Schritt S10: "J"), bewegt sich der Roboter erneut um die vorbestimmte Strecke Δs in der vorstehend ermittelten Soll-Bewegungsrichtung. Der Bediener zieht also auf einer gerasterten Bahn den TCP in die gewünschte Soll-Position und kann, indem er innerhalb der Pause von 0,1 s die Kraft F reduziert, den Roboter 1 sehr präzise in die neue Pose führen, die dann als neue Soll-Position von der Steifigkeitsregelung aufrechterhalten wird.

Durch entsprechende Eingabe an der Manipulatorsteuerung 2 kann der Bediener dabei nach einem initialisierenden Durchlauf der Schrittfolge S20 → S30 → S10, in dem die Soll-Bewegungsrichtung ermittelt worden ist, beispielsweise einer Absenkung seines TCPs in negativer z-Richtung um 10 cm, Schritt S20, d.h. die erneute Ermittlung der Soll-Bewegungsrichtung überspringen und somit die einmal ermittelte Soll-Bewegungsrichtung sozusagen "einfrieren". Dann wechselt das Verfahren mit einer Pause von je 0,1 s zwischen den Schritten S10 und S30, so dass der Bediener den TCP des Roboters 1 durch mehrfaches Antippen oder kontinuierliches Drücken mit ausreichend großer Kraft F ≥ Fmin in 0,1 mm - Schritten entlang der negativen z-Achsrichtung steuern kann. Er kann also insbesondere durch anfängliches Ziehen über die gewünschte Pose hinaus eine Soll-Bewegungsrichtung vorgeben und diese anschließend fein gerastert abfahren.

In den vorstehend beschriebenen Ausführungsbeispielen wird der Roboter 1 bzw. sein TCP in jedem Schritt S30 jeweils um eine vorab vorbestimmte Strecke Δs von 0,1 mm bzw. 0,1° bewegt. In einer nicht dargestellten Abwandlung hängt die vorbestimmte Strecke Δs linear von der auf den Manipulator ausgeübten Kraft F ab, so dass der Roboter umso größere Rasterschritte ausführt, je stärker der Bediener am TCP zieht. Auf diese Weise kann er den Roboter 1 beispielsweise zunächst rasch in die Nähe einer gewünschten Endposition bringen, indem er stark in diese Richtung zieht, um anschließend, wenn der Roboter 1 sich bereits in der Nähe der gewünschten Endposition befindet, den TCP durch Antippen mit jeweils kleiner Kraft um geringe vorbestimmte Strecken Δs hochpräzise in die endgültige Soll-Position zu steuern.

Bezugszeichenliste

| 1 | Roboter |
|---|---|
| 2 | Manipulatorsteuerung |
| TCP | Tool Center Point |
| F, F' | vom Bediener auf TCP ausgeübte Kraft |
| Δs | vorbestimmte Strecke |
| x, y, z | raumfestes kartesisches Koordinatensystem |

**Patentansprüche**

1.    Verfahren zum Steuern eines Manipulators, insbesondere eines Roboters (1), mit dem Schritt:

    a) Ermitteln (S20) einer Soll-Bewegungsrichtung (s) auf Basis einer von einem Bediener auf den Manipulator ausgeübten Kraft (F; F') durch eine Soll-Bewegungsrichtungsermittlungseinrichtung einer Vorrichtung (2) zur Steuerung des Manipulators;
    **gekennzeichnet durch** die Schritte:
    b) Vorbestimmen einer Strecke (Δs), indem die Größe der Strecke (Δs) von dem Bediener mittels einer Eingabeeinrichtung fest vorgegeben wird oder von der von dem Bediener auf den Manipulator ausgeübten Kraft abhängt; und

c) Bewegen (S30) des Manipulators in der ermittelten Soll-Bewegungsrichtung um die vorbestimmte Strecke ($\Delta$s) durch eine Bewegungseinrichtung der Vorrichtung (2).

2. Verfahren nach Anspruch 1, **dadurch gekennzeichnet, dass** zum Ermitteln der Soll-Bewegungsrichtung eine auf den Manipulator ausgeübte Kraft (F; F') erfasst wird (S10) oder dass zum Ermitteln der Soll-Bewegungsrichtung eine Bewegung (q) des Manipulators aufgrund einer auf ihn ausgeübten Kraft erfasst wird.

3. Verfahren nach einem der vorhergehenden Ansprüche, **dadurch gekennzeichnet, dass** der Manipulator in der Soll-Bewegungsrichtung um eine vorbestimmte Strecke ($\Delta$s) bewegt wird, indem er während einer vorbestimmten Zeit in der Soll-Bewegungsrichtung bewegt wird.

4. Verfahren nach einem der vorhergehenden Ansprüche, **dadurch gekennzeichnet, dass** Schritt c) wiederholt wird, solange eine Kraft auf den Manipulator ausgeübt wird; und/oder dass der Manipulator in Schritt c) nur bewegt wird, wenn eine auf ihn ausgeübte Kraft einen Mindestwert (Fmin) übersteigt.

5. Verfahren nach einem der vorhergehenden Ansprüche, **dadurch gekennzeichnet, dass** die Soll-Bewegungsrichtung (s) auf einen Unterraum (U) des kartesischen oder Gelenk-Arbeitsraums (A) des Manipulators eingeschränkt ist.

6. Verfahren nach dem vorhergehenden Anspruch, **dadurch gekennzeichnet, dass** die Bewegungsmöglichkeit des Manipulators auf diesen Unterraum (U) eingeschränkt wird.

7. Verfahren nach einem der vorhergehenden Ansprüche, **dadurch gekennzeichnet, dass** der Manipulator kraftgeregelt, insbesondere nachgiebig oder steifigkeitsgeregelt wird oder dass der Manipulator positionsgeregelt wird.

**Claims**

1. A method of controlling a manipulator, in particular a robot (1), comprising the step of:

a) determining (S20) a target direction of movement (s), by means of a device for determining a target direction of movement, of an apparatus (2) for controlling the manipulator, on the basis of a force (F; F') applied by an operator onto the manipulator;

**characterized by** the steps of:

b) predetermining a section of path ($\Delta$s) by the length of the section of path ($\Delta$s) being fixedly specified by the operator by means of an input device or depending on the force applied by the operator onto the manipulator; and

c) moving (S30) the manipulator in the determined target direction of movement by the predetermined section of path ($\Delta$s) by means of a movement device of the apparatus (2).

2. The method according to claim 1, **characterized in that**, in order to determine the target direction of movement, a force (F; F') applied onto the manipulator is detected (S10) or, in order to determine the target direction of movement, a movement (q) of the manipulator caused by a force applied thereupon is detected.

3. The method according to any one of the preceding claims, **characterized in that** the manipulator is moved in the target direction of movement by a predetermined section of path ($\Delta$s) by it being moved in the target direction of movement during a predetermined period of time.

4. The method according to any one of the preceding claims, **characterized in that** step c) is repeated as long as a force is applied onto the manipulator; and/or the manipulator is moved in step c) only when a force applied onto the manipulator exceeds a minimum value (Fmin).

5. The method according to any one of the preceding claims, **characterized in that** the target direction of movement (s) is confined to a subspace (U) of the Cartesian space or the manipulator joint workspace (A) of the manipulator.

6. The method according to the preceding claim, **characterized in that** the possible movements of the manipulator are confined to this subspace (U).

7. The method according to any one of the preceding claims, **characterized in that** the manipulator is force-controlled, in particular yieldably controlled or stiffness-controlled or that the manipulator is position-controlled.

**Revendications**

1. Procédé de commande d'un manipulateur, en particulier d'un robot (1), avec l'étape de :

a) détermination (S20) d'une direction de déplacement de consigne (s) sur la base d'une force (F ; F') exercée par un opérateur sur le manipulateur par un système de détermination de direction de déplacement de consigne d'un dispositif (2) de commande du manipulateur ; **caractérisé par** les étapes de :

b) préétablissement d'une distance (∆s), en ce que l'étendue de la distance (∆s) est prédéfinie de manière fixe par l'opérateur au moyen d'un équipement d'entrée ou dépend de la force exercée par l'opérateur sur le manipulateur ; et

c) déplacement (S30) du manipulateur, dans la direction de déplacement de consigne déterminée, de la distance préétablie (∆s) par un équipement de déplacement du dispositif (2).

2. Procédé selon la revendication 1, **caractérisé en ce que**, pour la détermination de la direction de déplacement de consigne, une force (F ; F') exercée sur le manipulateur est détectée (S10) ou **en ce que**, pour l'établissement de la direction de déplacement de consigne, un déplacement (q) du manipulateur est détecté en raison d'une force exercée sur ce dernier.

3. Procédé selon l'une quelconque des revendications précédentes, **caractérisé en ce que** le manipulateur est déplacé dans la direction de déplacement de consigne d'une distance préétablie (∆s) **en ce qu'**il est déplacé durant un temps préétabli dans la direction de déplacement de consigne.

4. Procédé selon l'une quelconque des revendications précédentes, **caractérisé en ce que** l'étape c) est répétée jusqu'à ce qu'une force soit exercée sur le manipulateur ; et/ou **en ce que** le manipulateur à l'étape c) est déplacé uniquement si une force exercée sur ce dernier dépasse une valeur minimale (Fmin).

5. Procédé selon l'une quelconque des revendications précédentes, **caractérisé en ce que** la direction de déplacement de consigne (s) est limitée à un sous-espace (U) de l'espace cartésien ou de l'espace de travail d'articulations (A) du manipulateur.

6. Procédé selon la revendication précédente, **caractérisé en ce que** la possibilité de déplacement du manipulateur est limitée à ce sous-espace (U).

7. Procédé selon l'une quelconque des revendications précédentes, **caractérisé en ce que** le manipulateur est régulé selon une force, en particulier régulé de manière flexible ou rigide, ou **en ce que** le manipulateur est régulé selon la position.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19626459 C2
- US 5911892 A
- US 6385508 B1
- DE 3211992 A1
- EP 1582955 A2